# EUROPEAN PATENT APPLICATION

(11) **EP 4 768 091 A1**
(43) Date of publication of application: **01.07.2026**
(21) Application number: 25198311.0
(22) Date of filing: 27.08.2025
(51) Int. Cl.: A63B 29/02, A62B 35/00, D06H 5/00, D07B 7/16, F16G 13/12, F16G 15/12, B66C 1/12, F16G 11/14, B32B 1/08

(54) **IMPROVED CLIMBING DEVICE AND RELATED METHOD FOR THE MAKING THEREOF**

(30) Priority: 24.12.2024 IT 202400029937
(71) Applicant: OBER ALP S.p.A., 39100 - Bolzano (IT)
(72) Inventor: DALL'ANESE, Matteo, I-39100 BOLZANO (IT)
(74) Representative: Mitola, Marco

(57) **Abstract**

A climbing device (4) comprising a wall fixing mechanism (8), comprising at least one movable end (12), from a closing configuration to an opening configuration, adapted to be inserted into a crack or a hole in said closing configuration and to interlock in said crack or hole in said opening configuration, a main body (16) provided with a drive mechanism (20) operatively connected to said at least one movable end (12), so as to allow the shifting from the closing configuration to the opening configuration, and also with a coupling ring (24), arranged opposite to the at least one movable end (12) with respect to the drive mechanism (20),
- wherein a flexible strap (28) is arranged inside said coupling ring (24). The flexible strap (28) comprises at least one piece of inner wire (32) extending from a first inner end (36) to a second inner end (40), repeatedly wound so as to form a plurality of overlapping rings (44), said first inner end (36) and second inner end (40) being joined together at an inner junction point (48), an outer tubular sock (52), wrapping said overlapping rings (44) and extending from a first outer end (56) to a second outer end (60). The first outer end (56) and the second outer end (60) are coupled to each other at an outer junction point (64).

## Description

### FIELD OF APPLICATION

The present invention concerns an improved climbing device and the related method for the making thereof.

### PRIOR ART

In the prior art there are climbing devices called 'friends' which provide the presence of a plurality of movable ends, configured to interlock in cracks or holes in walls or rocks. In particular, the movable ends provide for the use of rotating cams so as to first insert and then interlock them within said cracks or holes, according to an undercut mechanism.

In fact, said known climbing devices are created to allow the climber to obtain, during climbing, stable anchor points within which they can hook themselves with carabiners or even only to pull with the fingers of the hand.

The known devices thus provide a main body provided with a drive mechanism of said movable ends and also with a coupling ring for the user. Said coupling ring is typically a rigid ring, preferably metallic, to which a strap made of flexible material is connected, which can in turn be connected to the user.

Typically, the strap must have a variable length, to allow the user to adapt to the different situations that occur during climbing; for this reason, the strap is made by means of a closed ring folded back on itself in a figure-eight shape. Thanks to this folding, two at least partially overlapping rings are obtained, which allow the overall length of the user connection to be adjusted; the user can hook onto said rings with his/her hand or directly with a carabiner, which is in turn connected to the harness itself.

The strap must be made of flexible material precisely to allow adaptation to the different conditions that occur during climbing.

Known solutions provide for the use of segments of flattened straps, i.e., with a rectangular section, which are connected at the free ends by overlapping and subsequent stitching, so as to create a junction area of said free ends.

Said junction area constitutes a critical element because on the one hand it must ensure the necessary tensile strength, to pass tests with loads up to 22 kN or even higher, and on the other hand it must allow relative sliding between the strap rings to pass from the short configuration to the long configuration and vice versa. Furthermore, said junction area must allow, or at least not hinder, the hooking of the carabiner by the climber.

The use of the technique of overlapping the free ends with a rectangular section, with subsequent stitching, in fact creates sharp points which, with use, can get caught and thus complicate the operations of lengthening/shortening the strap by means of relative sliding between the rings.

For these reasons, the known type straps constitute a critical element because, although on the one hand they are capable of withstanding significant stresses during climbing and during any falls of the user, still ensuring the necessary flexibility during use, on the other hand they may encounter difficulties in relative sliding which complicate the operations of adjusting the length by the user and which can in the long run make climbing particularly tiring and stressful.

### DISCLOSURE OF THE INVENTION

There is therefore the felt need to solve the above-mentioned drawbacks and limitations of the known art.

Said need is satisfied by a climbing device in accordance with claim 1 and by a method for the making of a climbing device in accordance with claim 13.

### DESCRIPTION OF THE DRAWINGS

Further features and advantages of the present invention will be more clearly understood from the following description of its preferred and non-limiting embodiments, in which:
Figure 1 shows a perspective view of a climbing device, in extended configuration, in accordance with a possible embodiment of the present invention;
Figure 2 shows a perspective view of the climbing device of figure 1, in a short configuration;

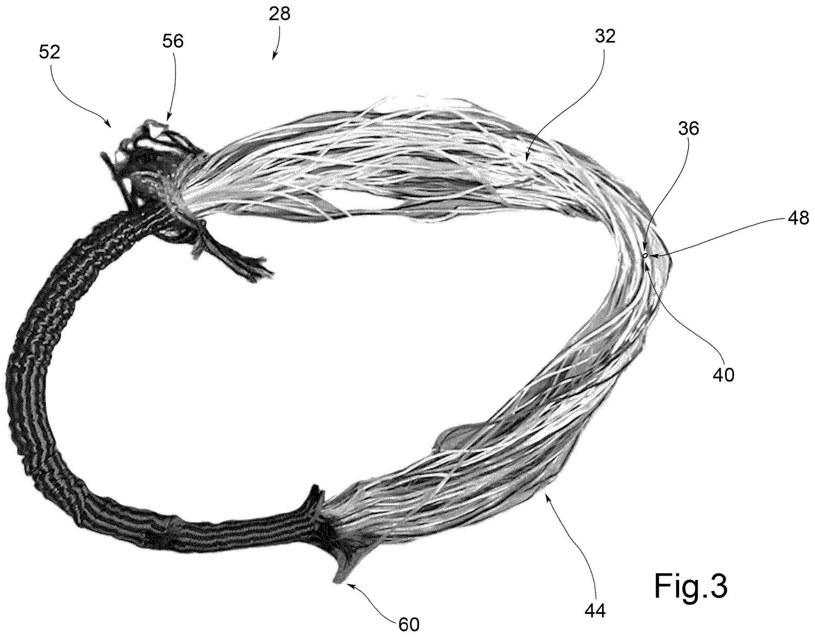

Figure 3 shows a view of the flexible strap of the climbing device of figure 1, partially open.

The elements or parts of elements in common between the embodiments described below will be denoted by the same reference numbers.

### DETAILED DESCRIPTION

With reference to the aforementioned figures, 4 globally denotes a schematic overall view of a climbing device in accordance with the present invention.

For the purposes of the present invention, the size or the scale of the climbing device 4 is irrelevant.

The climbing device 4 comprises a wall fixing mechanism 8, comprising at least one movable end 12, from a closing configuration to an opening configuration, adapted to be inserted into a crack or a hole, when it is in said closing configuration, and to interlock in said crack or hole, when it is in said opening configuration.

In accordance with a possible embodiment, said movable end 12 comprises at least one rotating cam 14 for passing from the closing configuration to the opening configuration.

The climbing device 4 further comprises a main body 16 provided with a drive mechanism 20 operatively connected to said at least one movable end 12, so as to allow the shifting from the closing configuration to the opening configuration, and also with a coupling ring 24, arranged opposite to the at least one movable end 12 with respect to the drive mechanism 20.

For example, the drive mechanism 20 provides a plurality of cables 22 operatively connected on one side to the movable end 12 and on the other to a drive handle 23 that can be gripped by the user in order to rotate said movable end 12.

The coupling ring 24 is preferably a rigid ring, for example metallic, optionally covered with plastic material.

Advantageously, inside said coupling ring 24 a flexible strap 28 is arranged.

In particular, said flexible strap 28 comprises at least one piece of inner wire 32 extending from a first inner end 36 to a second inner end 40, repeatedly wound so as to form a plurality of overlapping rings 44, said first inner end 36 and second inner end 40 being joined together at an inner junction point 48.

For example, said at least one piece of inner wire 32 comprises UHMWPE and/or aramid fibre.

For example, said at least one piece of inner wire 32 comprises a filling polyester, a polypropylene, a nylon and/or HTPL (high tenacity polyester). In general, the use of a fibre in any dyeable material is preferable.

In accordance with a possible embodiment, said flexible strap 28 comprises a plurality of pieces of inner wire 32, each being repeatedly wound so as to form a plurality of overlapping rings 44. Said overlapping rings 44 have substantially the same diameter.

In other words, multiple pieces of inner wire 32 are provided, each having its own first inner end 36 and second inner end 40, joined together after each piece of inner wire 32 has been wound to form a plurality of overlapping rings 44. This configuration is used in order to increase the safety features as well as the overall strength of the flexible strap 28.

The flexible strap 28 further comprises an outer tubular sock 52, wrapping said overlapping rings 44 and extending from a first outer end 56 to a second outer end 60.

For example, said outer tubular sock comprises UHMWPE, aramid fibre, and/or nylon and/or HTPL (high tenacity polyester).

The first outer end 56 and the second outer end 60 are coupled to each other at an outer junction point 64.

In accordance with one embodiment, the inner junction point 48 and/or the outer junction point 64 comprise stitches and/or fixing means. The fixing means may also comprise a heat-shrinking fabric.

In accordance with one embodiment, the inner junction point 48 and the outer junction point 64 are offset, that is, they are not overlapping.

In accordance with one embodiment, the inner junction point 48 and the outer junction point 64 are arranged in diametrically opposite positions to each other.

Preferably, the flexible strap 28 is a closed tubular body with a circular or elliptical section.

Preferably, said flexible strap 28 is inserted inside the coupling ring 24 in a folded configuration, so as to form a first connection ring 68 and a second connection ring 72, sliding with respect to each other and modifiable in width.

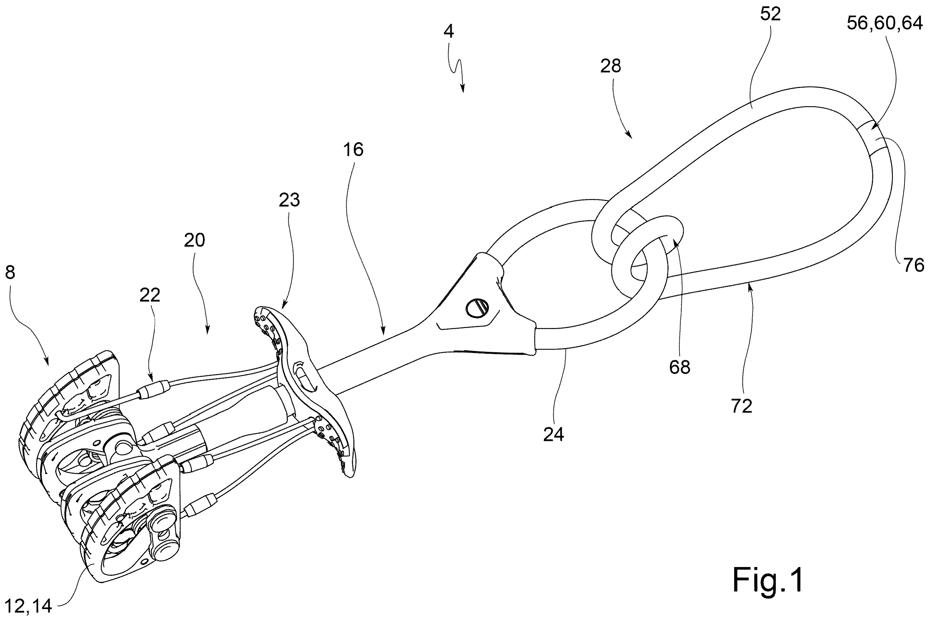

In particular, in figure 1 the extended configuration is shown, in which the first connection ring 68 has minimum width, while the second connection ring 72 has maximum width. This extended configuration is used by the user when the maximum possible distance is required with respect to the movable end 12 of the wall fixing mechanism 8.

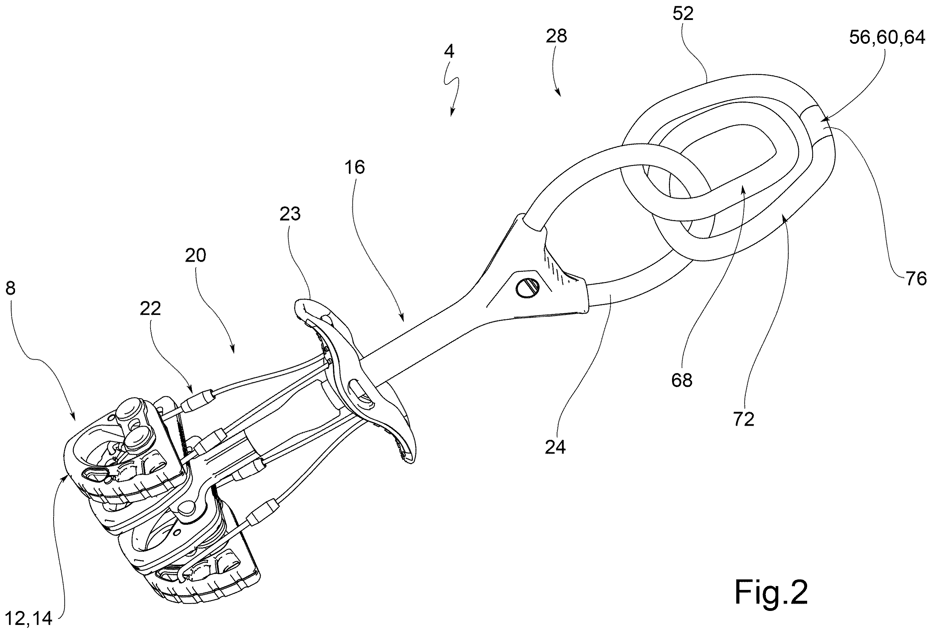

In figure 2, on the other hand, the short configuration is shown, in which the first connection ring 68 and the second connection ring 72 have substantially the same width. This short configuration is used by the user when the minimum possible distance is required with respect to the movable end 12 of the wall fixing mechanism 8.

The shifting from the short configuration to the extended configuration and vice versa is usually carried out manually by the operator.

Obviously, the shifting from the short configuration to the extended configuration or vice versa requires that the first connection ring 68 and the second connection ring 72 can slide freely on each other, avoiding possible mutual entanglements.

The circular or elliptical geometry of the flexible strap 28 ensures optimal smoothness between the first connection ring 68 and the second connection ring 72. Furthermore, said circular or elliptical geometry avoids possible entanglements of the flexible strap 28 with respect to the coupling ring 24 of the main body 16.

In accordance with a possible embodiment, a closing sleeve 76 is provided, coaxial with the outer tubular sock 52, which overlaps the outer junction point 64.

For example, the closing sleeve 76 is sewn on the outer tubular sock 52.

In accordance with one embodiment, the closing sleeve 76 is a piece of flexible tubular fabric.

As mentioned above, the climbing device 4 can be associated with a harness, not shown, in a known manner.

The method for the making of a climbing device in accordance with the present invention will now be described.

In particular, the method comprises the steps of preparing a wall fixing mechanism 8, comprising at least one movable end 12, from a closing configuration to an opening configuration, adapted to be inserted into a crack or a hole in said closing configuration and to interlock in said crack or hole in said opening configuration, preparing a main body 16 provided with a drive mechanism 20 operatively connected to said at least one movable end 12, so as to allow the shifting from the closing configuration to the opening configuration, and also with a coupling ring 24, arranged opposite to the at least one movable end 12 with respect to the drive mechanism 20.

Then the step of preparing an outer tubular sock 52 extending from a first outer end 56 to a second outer end 60, and the step of inserting said outer tubular sock 52 inside said coupling ring 24 are carried out.

A flexible strap 28 is prepared inside said outer tubular sock 52, by means of at least one piece of inner wire 32 extending from a first inner end 36 to a second inner end 40, repeatedly winding the piece of inner wire 32 so as to form a plurality of overlapping rings 44 inside the outer tubular sock 52.

Said first inner end 36 and second inner end 40 are joined at an inner junction point 48, and then said first outer end 56 and second outer end 60 are joined at an outer junction point 64.

Then the step of placing a closing sleeve 76, coaxial with the outer tubular sock 52, so as to overlap the outer junction point 64 is carried out.

Finally, the closing sleeve 76 is sewn on the outer tubular sock 52.

The steps of joining the inner junction point 48 and/or the outer junction point 64 include stitches and/or fixing means, such as a heat-shrinking fabric.

As can be appreciated from what has been described, the present invention makes it possible to overcome the drawbacks of the prior art.

In particular, thanks to the specific conformation of the strap of the climbing device, there is no risk of entanglement between the rings of the strap itself.

Indeed, the rings have a substantially circular section, and therefore are particularly smooth-sliding. Furthermore, the junction area of the free ends of the strap is also smooth-sliding, since it also has a substantially cylindrical geometry with a circular section. Moreover, the junction area of the strap is covered by a sleeve precisely in order to prevent the risk of entanglement.

The architecture and material of the strap guarantee extreme reliability and high strength for the strap, which has in fact passed all the test standards required by the regulations. The strap in accordance with the present invention features the same flexibility characteristics as the solutions of the prior art, without the related entanglement risks.

The strap in accordance with the present invention, despite its high strength, also presents a high degree of lightness, particularly appreciated in the climbing sector.

A person skilled in the art, in order to meet contingent and specific needs, may make numerous modifications and variations to the solutions described above.

The scope of protection of the invention is defined by the following claims.

### REFERENCE NUMBERS:

4: climbing device
8: wall fixing mechanism
12: movable end
14: rotating cam
16: main body
20: drive mechanism
22: cables
23: drive handle
24: coupling ring
28: flexible strap
32: inner wire
36: first inner end
40: second inner end
44: overlapping rings
48: inner junction point
52: outer tubular sock
56: first outer end
60: second outer end
64: outer junction point
68: first connection ring
72: second connection ring
76: closing sleeve

## Claims

1. Climbing device (4) comprising:
- a wall fixing mechanism (8), comprising at least one movable end (12), from a closing configuration to an opening configuration, adapted to be inserted into a crack or a hole in said closing configuration and to interlock in said crack or hole in said opening configuration,
- a main body (16) provided with a drive mechanism (20) operatively connected to said at least one movable end (12), so as to allow the passage from the closing configuration to the opening configuration, and also with a coupling ring (24), arranged opposite to the at least one movable end (12) with respect to the drive mechanism (20),
- wherein a flexible strap (28) is arranged inside said coupling ring (24),
- wherein said flexible strap (28) comprises:
- at least one piece of inner wire (32) extending from a first inner end (36) to a second inner end (40), repeatedly wound so as to form a plurality of overlapping rings (44), said first inner end (36) and second inner end (40) being joined together at an inner junction point (48),
- an outer tubular sock (52), wrapping said overlapping rings (44) and extending from a first outer end (56) to a second outer end (60),
- wherein the first outer end (56) and the second outer end (60) are coupled to each other at an outer junction point (64).

2. Climbing device (4) according to claim 1, wherein said flexible strap (28) is a closed tubular body with a circular or elliptical section.

3. Climbing device (4) according to claim 1 or 2, wherein a closing sleeve (76) is provided, coaxial with the outer tubular sock (52), which overlaps the outer junction point (64).

4. Climbing device (4) according to claim 3, wherein the closing sleeve (76) is sewn on the outer tubular sock (52).

5. Climbing device (4) according to claim 3 or 4, wherein the closing sleeve (76) is a piece of flexible tubular fabric.

6. Climbing device (4) according to any one of claims 1 to 5, wherein the inner junction point (48) and/or the outer junction point (64) include stitches and/or fixing means, such as a heat-shrinking fabric.

7. Climbing device (4) according to any one of claims 1 to 6, wherein the inner junction point (48) and the outer junction point (64) are offset, i.e. they are not overlapping each other.

8. Climbing device (4) according to any one of claims 1 to 7, wherein said at least one piece of inner wire (32) comprises UHMWPE and/or aramid fibre.

9. Climbing device (4) according to any one of claims 1 to 8, wherein said at least one piece of inner wire (32) comprises a filling polyester, a polypropylene, a nylon and/or HTPL (high tenacity polyester).

10. Climbing device (4) according to any one of claims 1 to 9, wherein said outer tubular sock (52) comprises UHMWPE and/or nylon and/or HTPL (high tenacity polyester) .

11. Climbing device (4) according to any one of claims 1 to 10, wherein said flexible strap (28) is inserted inside the coupling ring (24) in a folded configuration, so as to form a first connection ring (68) and a second connection ring (72), sliding with respect to each other and modifiable in width.

12. Harness comprising at least one climbing device (4) in accordance with any one of claims 1 to 11.

13. Method for the making of a climbing device (4) comprising the steps of:
- preparing a wall fixing mechanism (8), comprising at least one movable end (12), from a closing configuration to an opening configuration, adapted to be inserted into a crack or a hole in said closing configuration and to interlock in said crack or hole in said opening configuration,
- preparing a main body (16) provided with a drive mechanism (20) operatively connected to said at least one movable end (12), so as to allow the shifting from the closing configuration to the opening configuration, and also with a coupling ring (24), arranged opposite to the at least one movable end (12) with respect to the drive mechanism (20),
- preparing an outer tubular sock (52) extending from a first outer end (56) to a second outer end (60), and inserting it inside said coupling ring (24),
- preparing a flexible strap (28) inside said outer tubular sock (52), by means of at least one piece of inner wire (32) extending from a first inner end (36) to a second inner end (40), repeatedly winding the piece of inner wire (32) so as to form a plurality of overlapping rings (44) inside the outer tubular sock (52),
- joining said first inner end (36) and second inner end (40) at an inner junction point (48),
- joining said first outer end (56) and second outer end (60) at an outer junction point (64).

14. Method for the making of a climbing device (4) according to claim 13, comprising the step of placing a closing sleeve (76), coaxial with the outer tubular sock (52), so as to overlap the outer junction point (64),
- sewing the closing sleeve (76) on the outer tubular sock (52).

15. Method for the making of a climbing device (4) according to claim 13 or 14, wherein the steps of joining the inner junction point (48) and/or the outer junction point (64) include stitches and/or fixing means, such as a heat-shrinking fabric.
